# EUROPÄISCHE PATENTSCHRIFT

(11) **EP 1 430 245 B1**
(45) Veröffentlichungstag und Bekanntmachung des Hinweises auf die Patenterteilung: **17.08.2005**
(21) Anmeldenummer: 03738003.7
(22) Anmeldetag: 06.06.2003
(51) Int. Cl.: F16L 5/02, H02G 3/06, H02G 15/04

(54) **KLEMMVERSCHRAUBUNG MIT EINER SCHRAUBHÜLSE, EINER GEGENHÜLSE UND EINEM KLEMMEINSATZ**
TERMINAL CONNECTION COMPRISING A THREADED SLEEVE, A COUNTER-SLEEVE AND A TERMINAL INSERT
RACCORD D'ASSEMBLAGE AVEC DOUILLE FILETEE, DOUILLE ANTAGONISTE ET INSERT DE SERRAGE

(30) Priorität: 26.07.2002 DE 20211333 U
(43) Veröffentlichungstag der Anmeldung: 23.06.2004
(73) Patentinhaber: Anton Hummel Verwaltungs GmbH, 79183 Waldkirch (DE)
(72) Erfinder: BARTHOLOMÄ, Mario, 79297 Winden (DE); ZÜGEL, Fritz, 79183 Waldkirch (DE); GÖTZ, Volker, 79341 Kenzingen (DE); GERBER, Philipp, 79261 Gutach - Bleibach (DE)
(74) Vertreter: Maucher, Wolfgang, Dipl.-Ing.
(86) Internationale Anmeldenummer: PCT/EP2003/005970
(87) Internationale Veröffentlichungsnummer: WO 2004/015318

(56) Entgegenhaltungen:
- EP-A- 0 528 233
- US-A- 5 799 987

## Beschreibung

Die Erfindung betrifft eine Klemmverschraubung mit einer Schraubhülse, einer damit verbindbaren Gegenhülse oder dergleichen Druckstück und mit einem damit gegen einen länglichen Körper wie Kabel, Rohr, Schlauch, Stab oder dergleichen pressbaren Klernmeinsatz, wobei die Gegenhüls e oder das Druckstück den Klernmeinsatz mit einer ringartigen Druckfläche zumindest an einer der Stirnseiten beaufschlagt oder übergreift und beim Anziehen eines Gewindes mit einer sich verjüngenden Form, zum Beispiel mittels Rundung oder mittels eines Konus, welcher am Klernmeinsatz, in der Schraubhülse oder anstelle der ringartigen Druckfläche an der Gegenhülse angeordnet ist, einen mit Schlitzen oder ähnlichen Freiräumen versehenen Bereich des Klemmeinsatzes radial gegen den länglichen Körper hin verformt und wobei die Schraubhülse einen radial vorstehenden Bund oder Flansch aufweist, dessen Umfangskontur insbesondere unrund oder mehreckig ist.

Eine derartige Klemmverschraubung ist in mehreren Ausführungsformen aus EP 0 528 233 B1 bekannt und hat sich bewährt. Vor allem ist diese bekannte Klemmverschraubung gut geeignet, beispielsweise ein Kabel an einem Durchbruch eines Gehäuses zu befestigen, wobei das Anpressen des Klemmeinsatzes an das Kabel erst erfolgt, wenn die Klemmverschr aubung an dem Durchbruch des Gehäuses befestigt und das Kabel dann eingeführt sind.

Es gibt jedoch Fälle, in denen ein länglicher Körper, insbesondere ein Kabel schon fest mit einer Klemmverschraubung verbunden und dann erst an einem Gegenstück oder Gehäusedurchbruch befestigt werden soll. Dies bedeutet, dass der Klemmeinsatz zusammen mit dem von ihm gehaltenen länglichen Körper zum Beispiel mit Hilfe eines ein Gewinde aufweisenden Befestigungsabschnitts eingeschraubt und dadurch der schon eingeklemmte Körper seinerseits verdreht werden muss.

Es besteht deshalb die Aufgabe, eine Klemmverschraubung der eingangs genannten Art zu schaffen, mit welcher ein länglicher Körper schon vor seiner Befestigung an einem Gegenstück oder an einem Gehäusedurchbruch fest verbunden und nachträglich dann montiert werden kann, ohne den länglichen Körper entsprechend einer Schraubbewegung mehrfach verdrehen zu müssen.

Die Lösung dieser scheinbar widersprüchlichen Aufgabe besteht darin, dass zu der eingangs definierten Klemmverschraubung ein lösbar mit ihr verbindbares Kupplungsstück mit einer Vertiefung und einem Durchgang für den länglichen Körper gehört, in welche Vertiefung der radial überstehende Bund der Schraubhülse passt und einsteckbar ist, dass dieses Kupplungsstück am in Einsteckrichtung der Schraubhülse vorderen Randbereich seiner Vertiefung Vorsprünge zum Übergreifen des Bundes der Schraubhülse in Kupplungsposition aufweist und dass das Kupplungsstück der Vertiefung benachbart einen Befestigungsbereich zum Verbinden mit einem Gegenstück oder einer Haltemutter und/oder einem Durchbruch eines Gehäuses hat.

Auf diese Weise ist es möglich, einen länglichen Körper bereits mit der Klemmverschraubung fest zu verbinden und dann mit dem seinerseits mit einem Gegenstück, einem Gehäusedurchbruch oder einer Haltemutter verbundenen Kupplungsstück zu kuppeln, so dass keine oder nur eine geringe Verdrehung der Klemmverschraubung relativ zu dem Kupplungsstück und damit des länglichen Körpers oder Kabels notwendig ist. Der längliche Körper kann also schon bei seiner Lieferung fest mit einer gewünschten und passenden Klemmverschraubung verbunden sein, die dann beim Befestigen nur noch in das Kupplungsstück axial in dessen Vertiefung einzustecken und zu verriegeln ist.

Besonders günstig ist es dabei, wenn der Befestigungsbereich des Kupplungsstücks ein Außengewindeabschnitt ist, der zu einem Innengewinde eines Gehäusedurchbruchs oder einer Haltemutter oder dergleichen Gegenstück passt. Somit kann das Kupplungsstück vor dem Einfügen der Klemmverschraubung bereits fest imstalliert werden, indem es an einem entsprechenden Gegengewinde verschraubt wird. Gegebenenfalls kann dabei dieses Kupplungsstück zunächst schon mit der an einem länglichen Körper fest angeklemmten Klemmverschraubung gekuppelt sein, so dass es gemeinsam mit dieser geliefert werden kann. Vor der Montage wird dann das Kupplungsstück zunächst von der Klemmverschraubung gelöst und an dem Gegenstück befestigt, wonach dann die Klemmverschraubung wi-eder mit dem nun installierten Kupplungsstück mit einer allenfalls geringen Drehbewegung verbunden werden kann.

Besonders günstig ist es dabei, wenn die Schraubhülse dem Bund benachbart einen Befestigungsabschnitt, beispielsweise e in Außengewinde, aufweist, womit sie mit einem Gegenstück oder eine Haltemutter und/oder einem Durchbruch eines Gehäuses lösbar verbindbar ist, und wenn der Befestigungsabschnitt der Schraubhülse und der Befestigungsbereich de s Kupplungsstücks übereinstimmen. Dadurch passen dann entweder das Kupplungsstück oder aber auch der Befestigungsabschnitt der Schraubhülse an jeweils die selben Gegenstücke, Muttern oder mit Gewinde versehenen Durchbrüche von Gehäusen, so dass wahlweise eine zunächst noch geöffnete Klemmverschraubung oder eine schon fest mit einem länglichen Körper versehene Klemmverschraubung - dann mit Hilfe eines erfindungsgemäßen Kupplungsstücks - an dem Gegenstück oder Gehäuse montiert werden kann. Außerdem kann die Schraubhülse ein handelsübliches Teil einer ohne Kupplungsstück verwendbaren Klemmverschraubung sein, so dass Herstellung und Lagerhaltung begünstigt werden.

Das Kupplungsstück kann zwischen den radial nach innen gerichteten Vorsprüngen Zwischenräume größerer radialer Ausdehnung aufweisen, wobei die Ausdehnung der Zwischenräume in radialer und in Umfangsrichtung gleich oder größer als die der radial vorspringenden Bereiche oder Ecken des unrunden oder vieleckigen Bundes der Klemmverschraubung ist, die radial nach innen gerichteten Vorsprünge des Kupplungsstücks dem gegenüber soweit vorspringen, dass die Abflachungen zwischen den Ecken oder Vorsprüngen des unrunden oder mehreckigen Bundes zwischen sie passen und dass der unrunde oder mehreckige Bund nach dem axialen Einschieben wenigstens soweit unter die Vorsprünge des Kupplungsstücks verdrehbar ist, dass seine vorspringenden Bereiche oder Eckbereiche unter oder hinter den Vorsprüngen des Kupplungsstücks angeordnet sind. Diese Ausgestaltung des Kupplungsstücks erlaubt es also, durch eine geringfügige verdrehung Formschluss in axialer Richtung herzustellen, also die Klemmverschraubung mit praktisch einem Handgriff mit dem Kupplungsstück fest zu verbinden.

Eine zweckmäßige Ausgestaltung der Erfindung kann darin bestehen, dass an dem Kupplungsstück wenigstens eine insbesondere radial einschraubbare Klemmschraube oder dergleichen zum Beaufschlagen der Außenseite des Bundes in Kupplungsposition angeordnet ist. Damit kann die einmal hergestellte Kupplungsposition also sehr einfach fixiert und gegen ein ungewolltes Lösen beispielsweise durch Erschütterungen gesichert werden.

Die Klemmschraube(n) kann/können im Bereich eines Zwischenraums zwischen zwei radialen Vorsprüngen des Kupplungsstücks axial auf der Höhe der Umfangsfläche des in Gebrauchsstellung eingreifenden Bundes angeordnet sein und in Kupplungsposition eine Flachseite am Umfang des unrunden Bundes beaufschlagen. Dadurch kann ausgeschlossen werden, dass die Klemmverschraubung relativ zu dem Kupplungsstück weiter oder zurück verdreht und dadurch die Verbindung ungewollt gelöst wird.

Die Zahl der radial nach innen an dem Kupplungsstück vorstehenden Vor sprünge und die der zwischen ihnen angeordneten Zwischenräume kann der Zahl der Ecken oder gegenüber Abflachungen vorspringenden Bereiche des Bundes der Schraubhülse en tsprechen. Bei einem Sechskant können also beispielsweise sechs Vorsprünge und dazwischen sechs Zwischenräume vorgesehen sein, so dass zunächst die Ecken des sechseckigen Bundes durch die Zwischenräume axial einführbar und dann durch eine gering fügige Verdrehung alle jeweils hinter einen Vorsprung des Kupplungsstücks bewegbar sind.

Zum Kuppeln oder Verriegeln der Schraubhülse an dem Kupplungsstück kann eine relative gegenseitige Verdrehung um einem Winkelbetrag vorgesehen sein, der mit der Zahl der Vorsprünge oder Zwischenräume und Ecken oder dergleichen multipliziert 180° ergibt. Hat der Bund beispielsweise eine Viereckform, ergibt sich also eine Verdrehung um 45°, um eine entsprechende Kupplung herzustellen. Die schon erwähnte Ausgestaltung als sechseckiger Bund mit einem entsprechend gestaltet en Kupplungsstück bedeutet, dass zum Verriegeln oder Kuppeln eine relative Verdrehung um 30° durchzuführen ist und so weiter.

Es sei noch erwähnt, dass die Halteschraube(n) eine Madenschraube sein kann, die in Gebrauchsstellung also an der Außenseite des Kupplungsstücks nicht übersteht.

Ferner sei erwähnt, dass die Vertiefung an dem Kupplungsstück und dessen Befestigungsbereich axial hintereinander angeordnet sein können, so dass der längliche Körper praktisch geradlinig von der Schraubhülse ausgehend hindurchgeführt werden kann. Allerdings wäre auch eine winklige Anordnung möglich, wenn der längliche Körper entsprechend abgewinkelt in ein Gehäuse eingeführt werden soll. Die Abwinklung der Längsmittelachse des Befestigungsbereichs gegenüber der der Vertiefung des Kupplungsstücks könnte beispielsweise 90° betragen. Aber auch andere Winkel sind denkbar.

Eine abgewandelte Ausführungsform könnte auch darin bestehen, dass wenigstens einer der Vorsprünge des Kupplungsstücks bei nach dem Einstecken des Bundes der Schraubhülse in die Vertiefung aus einer zurückgezogenen Position etwa radial nach innen verstellbar, beispielsweise mittels Gewinde verschraubbar ist. Dadurch könnte gegebenenfalls teilweise oder sogar vollständig vermieden werden, dass zum gegenseitigen Kuppeln noch eine geringfügige relative Verdrehung der Schraubhülse gegenüber dem Kupplungsstück erforderlich ist. Allerdings müsste dazu eine entsprechende radiale Verstellbarkeit einzelner oder mehrerer Vorsprünge zum Übergreifen des Bundes vorgesehen werden.

Vor allem bei Kombination einzelner oder mehrerer der vorbeschriebenen Merkmale und Maßnahmen wird eine schnelle Montage von vorkonfektionierten Kabeln oder dergleichen länglichen Körpern mit Hilfe einer Klemmverschraubung oder Kabelverschraubung herkömmlicher Bauart ermöglicht, wobei diese Kabelverschraubung vormontiert oder vorkonfektioniert mit dem Kabel verbunden sein kann, ohne. dass der Benutzer die Kabelverschraubung oder Klemmverschraubung öffnen muss, um sie an einem Gegenstück oder Gehäuse befestigen zu können. Das Kupplungsstück dient in diesem Falle als Adapter, um den Übergang von der herkömmlichen schon installierten Kabel- oder Klemmverschraubung zu dem Gegenstück herzustellen.

Eine vorteilhafte und zweckmäßige Ausgestaltung der Anordnung von Klemmverschraubung und Kupplungsstück kann dabei vorsehen, dass innerhalb der Vertiefung des Kupplungsstücks als axialer Anschlag für den Bund ein elastischer Ring, ins besondere ein Dichtring oder O-Ring vorgesehen ist, der in Gebrauchsstellung vorzugsweise in axialer Richtung etwas zusammengedrückt ist. Dabei kann er mit einer Phase oder Abschrägung innerhalb der Vertiefung zusammenwirken. Vor allem wird durch einen solchen elastischen Ring nicht nur eine Abdichtung innerhalb des Kupplungsstücks oder Adapters erzielt, sondern auch eine axiale Rückstellkraft auf den Bund in dem Sinne ausgeübt, dass er spielfrei unter die Vorsprünge des Kupplungsstücks greift.

Nachstehend sind Ausführungsbeispiele der Erfindung anhand der Zeichnung näher Beschrieben. Es zeigt in zum Teil schematisierter Darstellung:
- Fig. 1: eine schaubildliche Explosionsdarstellung einer Klemmverschraubung, bei welcher ein länglicher Körper innerhalb einer Schraubhülse, einer damit verschraubbaren Gegenhülse und einem Klemmeinsatz bereits vormontiert ist und in ein zu dieser Klemmverschraubung gehörendes und passendes Kupplungsstück einsetzbar ist, welches seinerseits mit einem ein Außengewinde aufweisenden Befestigungsbereich in einen ein Innengewinde aufweisenden Durchbruch eines Gehäuses einsetzbar ist,
- Fig. 2: eine der Fig. 1 entsprechende Darstellung, wobei das Kupplungsstück an dem Gehäuse befestigt ist, so dass der längliche Körper mit der vormontierten Klemmverschraubung darin einsetzbar ist, ohne dass dieser Einsetzvorgang mehrerer Umdrehungen dieser Verschraubung relativ zu dem Gehäuse bedarf,
- Fig. 3: eine teilweise im Schnitt gehaltene schaubildliche Ansicht der gesamten Klemmverschraubung mit Kupplungsstück in Gebrauchsstellung, wobei die Befestigung des Kupplungsstücks an einem Gegenstück oder Gehäuse der besseren Übersicht wegen nicht dargestellt ist und wobei ein Befestigungsabschnitt der Schraubhülse und ein diesem Befestigungsabschnitt benachbarter Flansch in eine entsprechende Vertiefung des Kupplungsstücks eingreifen,
- Fig. 4: eine der Fig. 3 entsprechende Darstellung, bei welcher die Schraubhülse der Klemmvers chraubung selbst keinen Befestigungsabschnitt hat, so dass für ihre Befestigung an einem Gegenstück oder Gehäusedurchbruch in jedem Fall ein erfindungsgemäßes Kupplungsstück erforderlich ist,
- Fig. 5: eine Ansicht eines sechseckigen Bundes oder Flansches der Schraubhülse und der Eintrittsöffnung in die Vertiefung des Kupplungsstücks mit sechs Vorsprüngen und sechs Zwischenräumen zwischen diesen Vorsprüngen, die nach einem axialen Einschieben des sechseckigen Bundes und einer Verdrehung um 30° die Eckbereiche übergreifen,
- Fig. 6: eine der Fig. 5 ent sprechende Darstellung, bei welcher ein Bund mit acht Ecken und eine demgemäß gestaltete Vertiefung des Kupplungsstücks darge stellt sind und zum Kuppeln eine Verdrehung um 22,5° -vorgesehen ist,
- Fig. 7: eine der Fig. 5 und 6 entsprechende Darstellung für einen etwa viereckigen oder quadratischen Bund, der zum Kuppeln mit dem Kupplungsstück um 45° zu verdrehen ist, sowie
- Fig. 8: einen Bund mit zwei Abflachungen und zwischen diesen angeordneten bogenförmigen Vorsprüngen, der in eine entsprechende Vertiefung des Kupplungsstücks passt und zum Kuppeln um etwa 90° zu verdrehen ist.

Bei der nachfolgenden Beschreibung verschiedener Ausführungsbeispiele einer im Ganzen 1 bezeichneten Klemmverschraubung sind jeweils einander entsprechende Teile mit übereinstimmenden Bezugsziffern oder -zahlen versehen, selbst wenn sie in ihrer Form oder Ausgestaltung voneinander abweichen. Im Einzelfall bei einem Ausführungsbeispiel nicht beschriebene Teile oder Funktionen haben dabei die selbe Bedeutung wie bei denjenigen Ausführungsbeispielen, bei denen diese Teile oder Funktionen erläutert sind.

Die dargestellten Klemmverschraubungen 1 weisen jeweils eine Schraubhülse 2, eine damit verbindbare Gegenhülse 3, zweckmäßiger Weise eine Überwurfmutter oder dergleichen Druckstück, und einen mit Hilfe dieser Gegenhülse oder Überwurfmutter 3 gegen einen länglichen Körper 4, bevorzugt ein Kabel, pressbaren Klemmeinsatz auf, der in den Figuren nicht zu sehen ist und entweder ein separat einsetzbares Teil sein kann, vor allem, wenn die Schraubhülse aus Metall besteht, oder der mit der Schraubhülse auch vor allem bei einer Fertigung aus Kunststoff einstückig verbunden sein könnte, wie aus EP 0 528 233 B1 bekannt ist.

Wie ebenfalls aus EP 0 528 233 B1 bekannt, übergreift die Gegenhülse 3 den Klemmeinsatz mit einer ringartigen Druckfläche zumindest an einer Stirnseite des Klemmeinsatzes, kann jedoch in Gebrauchsstellung auch weitere Bereiche insbesondere an der radial außen befindliche Oberfläche eines solchen Klemmeinsatzes beaufschlagen. In bekannter Weise wird mit einer derartigen ringartigen Druckfläche beim Anziehen des Gewindes zwischen Schraubhülse 2 und Gegenhülse 3 aufgrund einer sich verjüngenden Form, zum Beispiel mittels Rundung oder mittels eines Konus, ein mit axialen Schlitzen versehener Bereich des Klemmeinsatzes radial gegen den länglichen Körper 4 hin verformt und angedrückt. Auf diese Weise kann der längliche Körper 4 mit der Schraubhülse 2 verklemmt und verbunden werden.

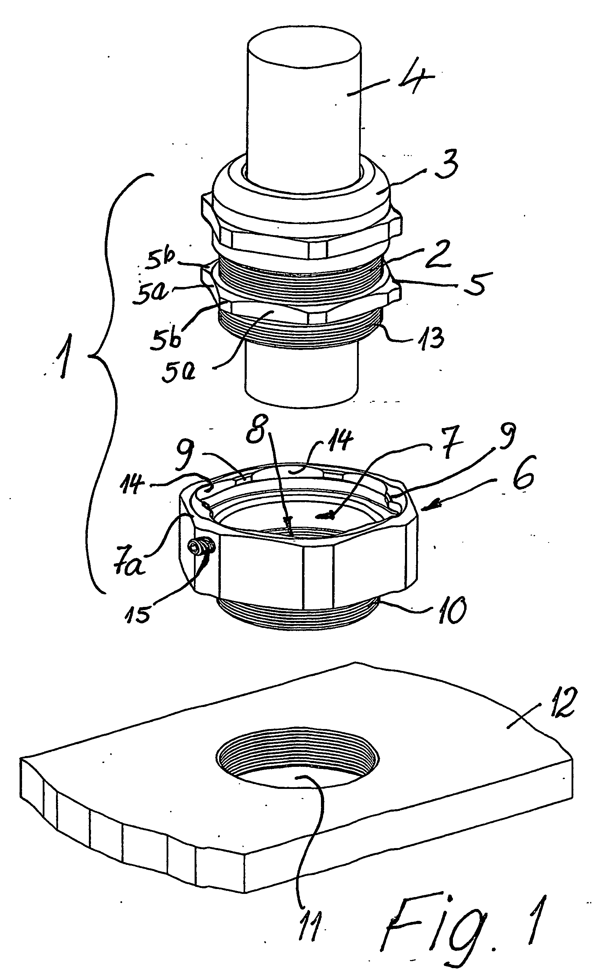

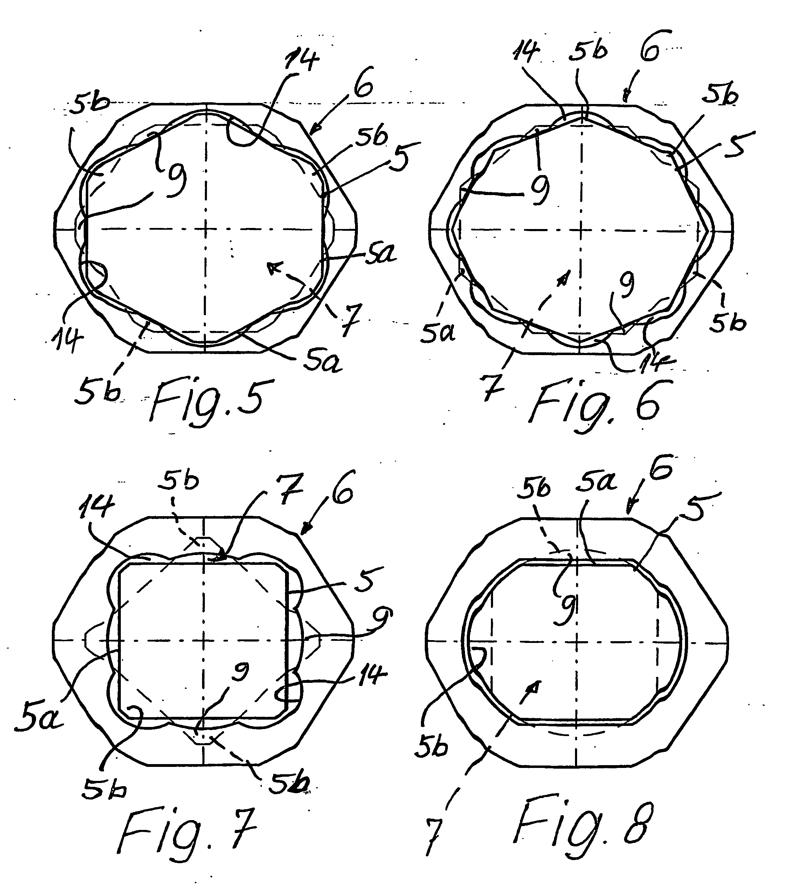

Die Schraubhülse 2 weist einen radial vorstehenden Bund oder Flansch 5, im folgenden vor allem "Bund 5" genannt, auf, dessen Umfangskontur gemäß den Fig. 5 bis 8 unrund oder mehreckig ist. Gemäß den Fig. 1 bis 5 ist dieser Bund 5 sechseckig, was einer üblichen Form einer Mutter oder eines Schraubenkopfes entspricht und deshalb auch gut zu entsprechenden Schraubenschlüsseln oder dergleichen Werkzeugen passt. Er kann gemäß Fig. 6 jedoch auch achteckig, gemäß Fig. 7 viereckig oder gemäß Fig. 8 in der Weise unrund sein, dass zwei einander gegenüberliegende Abflachungen durch demgegenüber radial größere, bogenförmige Bereiche verbunden sind.

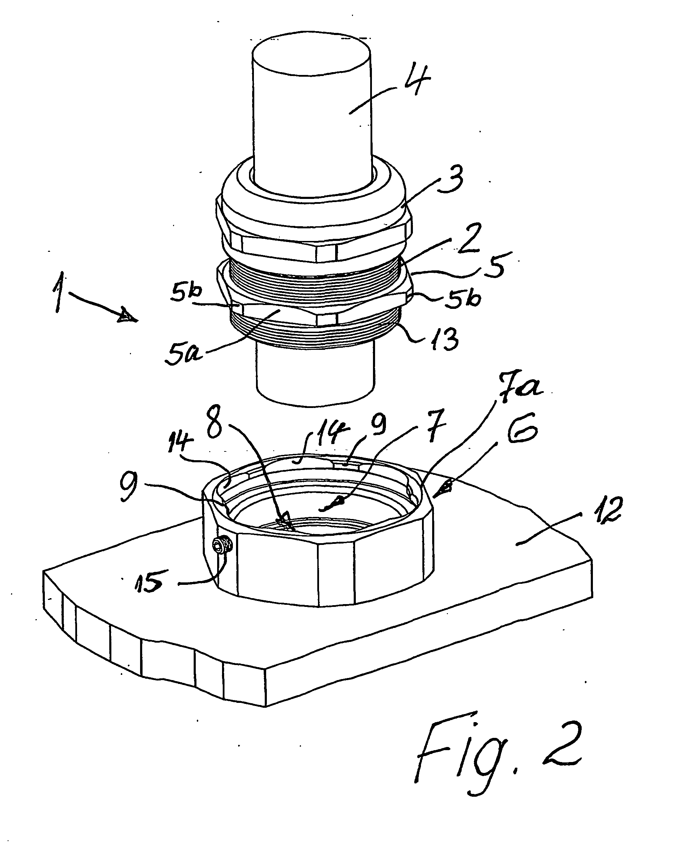

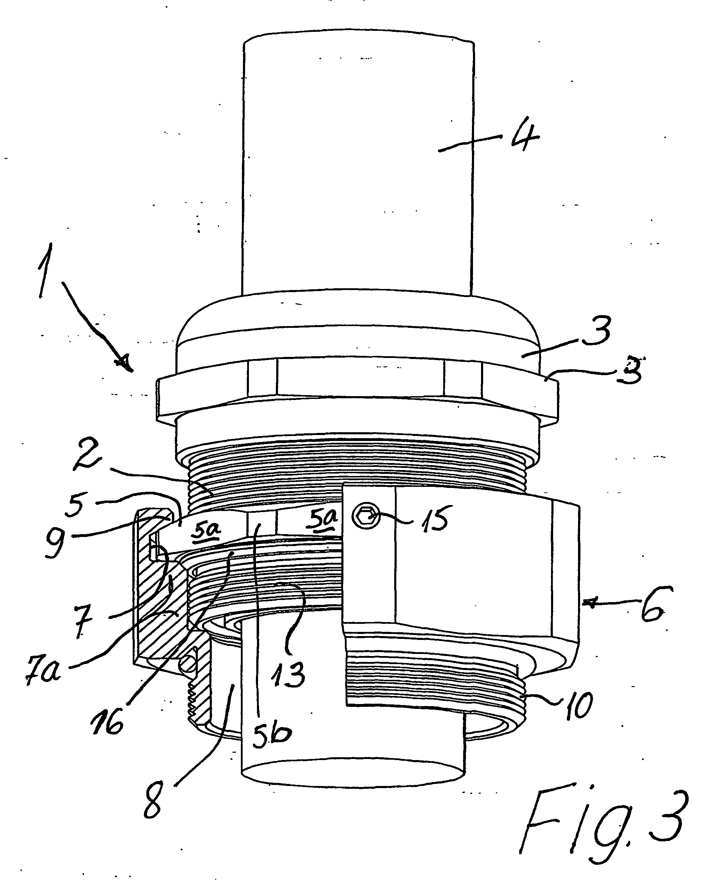

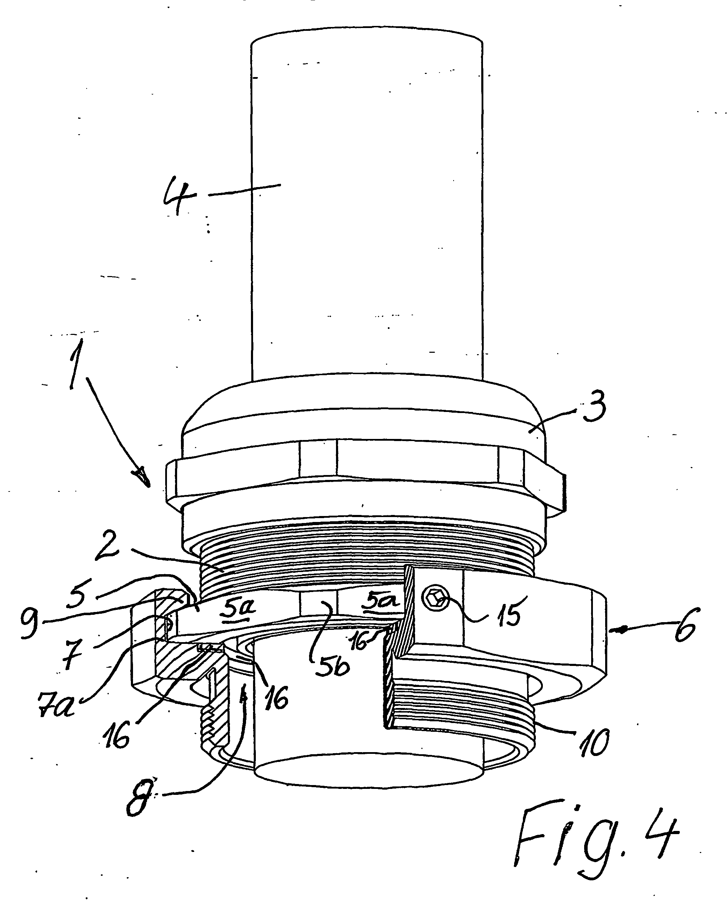

Zu der Klemmverschraubung 1 gehört außerdem - abweichend von der Klemmverschraubung gemäß EP 0 528 233 B1 - ein lösbar mit ihr verbindbares Kupplungsstück 6, welches als Adapter benutzt werden kann. Dieses Kupplungsstück 6 ist mit einer Vertiefung 7 und mit einem Durchgang 8 für den länglichen Körper 4 versehen, in welche Vertiefung 7 gemäß den Fig. 3 und 4 der radial überstehende Bund 5 der Schraubhülse passt und einsteckbar ist. In den Fig. 1 und 2 ist dieser Einsteckvorgang noch nicht durchgeführt, in Fig. 3 und 4 jedoch bereits erfolgt.

Dieses Kupplungsstück 6 hat am in Einsteckrichtung der Schraubhülse 2 vorderen oder oberen Rand seiner Vertiefung 7 in radialer Richtung einwärts nach innen gerichtete Vorsprünge 9 zum Übergreifen des Bundes 5 der Schraubhülse 2 in der in Fig. 3 und 4 dargestellten Kupplungsposition.

Ferner hat das Kupplungsstück 6 der Vertiefung 7 in axialer Richtung benachbart einen Befestigungsbereich 10 zum Verbinden mit einem Gegenstück, wie man es beim Vergleich der Fig. 1 und 2 gut erkennt. Dort ist das Verbinden mit einem Durchbruch 11 eines nur mit einem Wandstück dargestellten Gehäuses 12 gezeigt. Der Befestigungsbereich 10 hat dabei ein Außengewinde, welches zu einem Innengewinde in dem Durchbruch 11 passt, so dass das Kupplungsstück in diesen Durchbruch 11 eingeschraubt werden kann, wonach es die in Fig. 2 dargestellte Position hat. Die Wandung 7a der Vertiefung 7 ist dabei als Mehrkant, bevorzugt als Sechskant ausgebildet, um einen Angriff für ein entsprechendes Schraubwerkzeug, beispielsweise für einen Schraubenschlüssel, zu bieten.

Da der Befestigungsbereich 10 des Kupplungsstücks 6 ein Außengewinde hat, ist auch eine Verbindung mit einer Haltemutter oder einem sonstigen Gegenstück möglich.

Die vorbeschriebene Anordnung ermöglicht es, einen länglichen Körper 4, beispielsweise ein Kabel, bereits mit einer Schraubhülse 2 zu verklemmen, also die Schraubhülse 2 mit Gegenhülse oder Überwurfmutter 3 an dem länglichen Körper 4 vorzumontieren, bevor die Befestigung beispielsweise an dem Durchbruch 11 erfolgt, ohne dass für eine solche Befestigung eine erhebliche Verdrehung um mehrere Umdrehungen des länglichen Körpers 4 erforderlich ist, da die Schraubhülse 2 nur in das an dem Durchbruch 11 befestigte Kupplungsstück 6 eingekuppelt werden muss, was nachfolgend näher beschrieben wird.

Zunächst sei jedoch darauf hingewiesen, dass die Ausführungsbeispiele gemäß Fig. 3 und 4 einen Unterschied haben. Beim Ausführungsbeispiel nach Fig. 3 weist die Schraubhülse 2 dem Bund 5 benachbart - und zwar auf der der Gegenhülse 3 abgewandten Seite - einen Befestigungsabschnitt 13, beispielsweise ein Außengewinde, auf, womit sie an sich mit einem Gegenstück oder einer Haltemutter oder einem Durchbruch 1 1 eines Gehäuses 12 lösbar verbindbar ist. In diesem Falle handelt es sich also um eine Schraubhülse 2 einer Klemmverschraubung 1, die auch ohne erfindungsgemäßes Kupplungsstück 6 an einem Gegenstück befestigt werden kann, was insbesondere dann zweckmäßig und durchführbar ist, wenn die Verklemmung mit dem länglichen Körper 4 noch nicht durchgeführt ist. Ist diese jedoch bereits erfolgt, kann dennoch die Befestigung mit Hilfe des Kupplungsstücks 6 erfolgen, ohne die Schraubhülse 2 für diese Befestigung mehrfach zum Anziehen des Gewindes ihres Befestigungsabschnitts 13 verdrehen zu müssen.

Das Ausführungsbeispiel gemäß Fig. 4 zeigt eine Schraubhülse 2, bei der ein derartiger Befestigungsabschnitt 13 nicht vorhanden ist, die also regelmäßig mit einem zugehörigen Kupplungsstück 6 zu montieren ist.

Der Befestigungsabschnitt 13 der Schraubhülse 2 gemäß Fig. 3 und der Befestigungsbereich 10 des Kupplungsstücks 6 sind dabei übereinstimmend ausgebildet und bemessen, so dass wahlweise eine Befestigung mit oder ohne Kupplungsstück 6 an dem selben Gegengewinde und Gegenstück möglich ist.

In den Fig. 5 bis 8 sind verschiedene Umrissformen des Bundens 5 in Relation zu den radial einwärts gerichteten Vorsprünge 9 und zwischen diesen angeordneten Zwischenräumen 1 4 dargestellt, wobei die Abmessung in radialer Richtung im Bereich der Zwischenräume 14 größer als im Bereich der Vorsprünge 9 ist, so dass die größer bemessenen Abschnitte, insbesondere die Ecken oder sonstigen vorspringenden Bereiche 5b des Bundes 5 im Bereich der Zwischenräume 14 in die Vertiefung 7 eingeführt werden können.

Die Ausdehnung der Zwischenräume 14 in radialer und in Umfangsrichtung ist dabei gleich oder vorzugsweise größer als die der radial vorspringenden Bereiche oder Ecken 5b des unrunden oder vieleckigen Bundes 5 der Klemmverschraubung 1 .

Die radial nach innen beziehungsweise einwärts gerichteten Vorsprünge 9 des Kupplungsstücks 6 hingegen springen soweit vor, dass die Abflachungen 5a zwischen den Ecken 5b oder Vorsprünge des unrunden oder mehreckigen Bundes 5 zwischen sie passen, wie es in den Fig. 5 bis 8 deutlich dargestellt ist.

Der unrunde oder mehreckige Bund 5 kann dann nach dem axialen Einschieben wenigstens soweit unter die Vorsprünge 9 des Kupplungsstücks 6 verdreht werden, dass seine vorspringenden Bereiche oder Eckbereiche 5b unter oder hinter den Vorsprünge 9 des Kupplungsstücks 6 zu liegen kommen und angeordnet sind. Die Vertiefung 7 ist in axialer Richtung also so bemessen, dass unterhalb der Vorsprünge 9 genügend Raum für die axiale Ausdehnung des Bundes 5 vorhanden ist.

Für die Montage wird also zunächst das Kupplungsstück 6 an einem Gegenstück befestigt, insbesondere mit seinem ein Außengewinde aufweisenden Befestigungsbereich 10 an einem Gegenstück verschraubt. Danach kann die mit einem länglichen Körper oder Kabel 4 bereits verklemmte Schraubhülse 2 der Klemmverschraubung mit ihrem Bund oder Flansch 5 in die Vertiefung 7 dieses Kupplungsstücks 6 in einer gegenseitigen relativen Lage axial eingeführt werden, wie es in den Fig. 5 bis 8 dargestellt ist. Anschließend wird die Schraubhülse 2 mit ihrer Gegenhülse 3 und damit ihr Bund 5 verdreht, so dass die Bereiche 5b größerer radialer Abmessung des Bundes 5 unter die Vorsprünge 9 am Eingang in die Vertiefung 7 gelangen, wodurch sie in axialer Richtung formschlüssig festgelegt sind. Diese Art der Befestigung entspricht also im wesentlichen einem Bajonettverschluss, das heißt die Verbindung zwischen der Schraubhülse 2 und ihrem Bund oder Flansch 5 mit dem Kupplungsstück 6 kann auch als Bajonettverschluss bezeichnet oder ausgeführt sein.

Um ein ungewolltes Lösen dieser Verbindung zu verhindern, ist an dem Kupplungsstück 6 im Ausführungsbeispiel eine radial einschraubbare Klemmschraube 15 zum Beaufschlagen der Außenseite des Bundes 5 in Kupplungsposition angeordnet, die dabei als Madenschraube ausgestaltet ist, also in Gebrauchsstellung an der Außenseite des Kupplungsstücks 6 nicht übersteht. Diese Klemmschraube 15 ist dabei im Bereich eines Zwischenraums zwischen zwei radialen Vorsprüngen 9 des Kupplungsstücks 6 auf der Höhe der Umfangsfläche des in Gebrauchsstellung eingreifenden Bundes 5 angeordnet und beaufschlagt in Kupplungsposition eine Flachseite 5a zwischen vorspringenden Bereichen oder Ecken 5b am Umfang des unrunden Bundes 5. Dabei sind die Zwischenräume zwischen den Vorsprüngen 9 an dem Kupplungsstück 6 im Bereich von dessen außenseitigen Ecken angeordnet, so dass diese Klemmschraube 15 sich an einem Bereich größerer oder größter Dicke der Wandung 7a der Vertiefung 7 befindet und entsprechend viele Gewindegänge ermöglicht.

Gemäß den Fig. 5 bis 8 entspricht die Zahl der radial nach innen an dem Kupplungsstück 6 am oberen Rand der Vertiefung 7 vorstehenden Vorsprünge 9 und die der zwischen ihnen angeordneten Zwischenräume der Zahl der Ecken oder Vorsprünge 5b des Bundes 5 der Schraubhülse 2, so dass in Kupplungsposition jede Ecke 5b beziehungsweise jeder gegenüber einer Abflachung 5a vorspringende Bereich des Bundes 5 von einem Vorsprung 9 übergriffen wird.

Zum Kuppeln oder Verriegeln der Schraubhülse 2 an dem Kupplungsstück 6 ist dabei eine relative gegenseitige - erheblich unter 360° liegende - Verdrehung um einen Winkelbetrag vorgesehen, der mit der Zahl der Vorsprünge 9 oder Zwischenräume 14 oder Ecken 5b multipliziert 1 80° ergibt. Bei der Anordnung nach Fig. 5 mit sechs Ecken 5b an dem sechskantförmigen Bund 5 und entsprechend vielen Vorsprüngen 9 ist also eine Verdrehung um 30° durchzuführen, um die Ecken 5b mittig unter die Vorsprünge 9 zu bewegen. Beim Ausführungsbeispiel nach Fig. 6 mit acht Ecken und Vorsprüngen beträgt dieser Drehwinkel sogar nur 22,5°, während bei einer Anordnung mit vier Ecken 5b gemäß Fig. 7 der für eine Montage und Kupplung erforderliche Drehwinkel 45° beträgt.

Fig. 8 zeigt eine Anordnung mit zwei gegenüber Abflachungen radial vorspringenden Bereichen 5b die eine Verdrehung um 90° erfordern.

In den Fig. 5 bis 8 sind die Kupplungspositionen jeweils mit unterbrochenen Linien zusätzl ich zu den Ausgangspositionen dargestellt.

Während im Ausführungsbeispiel die Vertiefung 7. mit ihrer als Sechskant ausgebildeten Begrenzungswand 7a und der Befestigungsbereich 10 des Kupplungsstücks 6 axial hintereinander angeordnet sind, wobei der Befestigungsbereich 10 als Stutzen geringerer radialer Ausdehnung unterhalb der sechskantförmigen Wandung 7a der Vertiefung 7 vorgesehen ist, könnte dieser Befestigungsbereich 10 gegenüber der Vertiefung auch in einem Winkel angeordnet sein, dass heißt, das Kupplungsstück 6 könnte auch als Winkelstück ausgebildet sein, um einen länglichen Körper 4 unter einem entsprechenden Winkel in ein Gehäuse 12 einzuführen. In einem solchen Falle wäre also die Längsmittelachse des Befes tigungsbereichs 10 gegenüber der Längsmittelachse der Vertiefung 7 des Kupplungsstücks 6 abgewinkelt, beispielsweise unter 90°.

In den Fig. 3 und 4 erkennt man noch, dass innerhalb der Vertiefung 7 an der in Gebrauchsstellung dem Bund 5 zugewandten Seite als axialer Anschlag für diesen Bund 5 ein elastischer Ring 16, nämlich ein Dichtring vorges ehen ist, der im Ausführungsbeispiel nach Fig. 3 als O-ring und im Ausführungsbeispiel nach Fig. 4 als Flachdichtung ausgebildet ist. Dieser Ring 16 ist in Gebrauchsstellung in axial er Richtung etwas zusammengedrückt, bewirkt also eine Art Rückstellkraft, die ein in axialer Richtung zwischen dem Bund 5 und den Vorsprüngen 9 befindliches Spiel beseitigt. Zusätzlich wird eine Abdichtung bewirkt, so dass dieser Ring 16 eine Doppelfunktion hat.

## Patentansprüche

1. Klemmverschraubung (1) mit einer Schraubhülse (2), einer damit verbindbaren Gegenhülse (3) oder dergleichen Druckstück und mit einem damit gegen einen länglichen Körper (4) wie Kabel, Rohr, Schlauch, Stab oder dergleichen pressbaren Klemmeinsatz, wobei die Gegenhülse (3) oder das Druckstück den Klemmeinsatz mit einer ringartigen Druckfläche zumindest an einer der Stirnseiten beaufschlagt oder übergreift und beim Anziehen eines Gewindes mit einer sich verjüngenden Form, zum Beispiel mittels Rundung oder mittels eines Konus, welcher am Klemmeinsatz, in der Schraubhülse (2) oder anstelle der ring-artigen Druckfläche in der Gegenhülse (3) angeordnet ist, einen mit Schlitzen oder ähnlichen Freiräumen versehenen Be reich des Klemmeinsatzes radial gegen den länglichen Körper hin verformt und wobei die Schraubhülse (2) einen radial vorstehenden Bund oder Flansch (5) aufweist, dessen Umfangskontur insbesondere unrund oder mehreckig ist, **dadurch gekennzeichnet, dass** zu der Klemmverschraubung (1) ein lösbar mit ihr verbindbares Kupplungsstück (6) mit einer Vertiefung (7) und mit einem Durchgang (8) für den länglichen Körper (4) gehört, in welche Vertiefung (7) der radial überstehende Bund (5) der Schraubhülse (2) passt und einsteckbar ist, dass dieses Kupplungsstück (6) am in Einsteckrichtung der Schraubhülse (2) vorderen Randbereich seiner Vertiefung (7) in radialer Richtung nach innen gerichtete Vorsprünge (9) zum Übergreifen des Bundes (5) der Schraubhülse (2) in Kupplungsposition aufweist und dass das Kupplungsstück (6) der Vertiefung (7) benachbart einen Befestigungsbereich (10) zum Verbinden mit einem Gegenstück oder einer Haltemutter und/oder einem Durchbruch (11) eines Gehäuses (12) hat.

2. Klemmverschraubung nach Anspruch 1, **dadurch gekennzeichnet, dass** der Befestigungsbereich (10) des Kupplungsstücks (6), ein Außengewinde hat, das zu einem Innengewinde eines Gehäusedurchbruchs (11) oder einer Haltemutt er .oder dergleichen Gegenstück passt.

3. Klemmverschraubung nach Anspruch 1 oder 2, **dadurch gekennzeichnet, dass** die Schraubhülse (2) dem Bund (5) benachbart einen Befestigungsabschnitt (13), beispielsweise ein Außengewinde, aufweist, womi-t sie mit einem Gegenstück oder einer Haltemutter und/oder einem Durchbruch (11) eines Gehäuses (12) lösbar verbindbar ist, und dass der Befestigungsabschnitt (13) der Schraubhülse (2) und der Befestigungsbereich (10) des Kupplungsstücks (6) übereinstimmend ausgebildet und/oder bemessen sind.

4. Klemmverschraubung nach einem der Ansprüche 1 bis 3, **dadurch gekennzeichnet, dass** das Kupplungsstück (6) zwischen den radial nach innen gerichteten Vorsprüngen (9) Zwischenräume (14) größerer radialer Ausdehnung aufweist, wobei die Ausdehnung der Zwischenräume (14) in radialer und in Umfangsrichtung gleich oder größer als die der radial vorspringenden Bereich oder Ecken des unrunden oder vieleckigen Bundes (5) der Klemmverschraubung (1) ist, die radial nach innen gerichteten Vorsprünge (9) des Kupplungsstücks (6) demgegenüber soweit vorspringen, dass die Abflachungen (5a) zwischen den Ecken (5b) der Vorsprünge des unrunden oder mehreckigen Bundes (5) zwischen sie passen und dass der unrunde oder mehreckige Bund (5) nach dem axialen Einschieben wenigstens soweit unter die Vorsprünge (9) des Kupplungsstücks (6) verdrehbar ist, dass seine vorspringenden Bereiche oder Eckbereiche (5b) unter oder hinter den Vorsprüngen (9) des Kupplungsstück (6) angeordnet sind.

5. Klemmverschraubung nach einem der Ansprüche 1 bis 4, **dadurch gekennzeichnet, dass** an dem Kupplungsstück (6) wenigstens eine insbesondere radial einschraubbare Klemmschraube (15) oder dergleichen, zum Beispiel eine Madenschraube zum Beaufschlagen der Außenseite des Bundes (5) in Kupplungsposition angeordnet ist.

6. Klemmverschraubung nach Anspruch 5, **dadurch gekennzeichnet, dass** die Klemmschraube(n) (15) im Bereich eines Zwischenraumes zwischen- zwei radialen Vorsprüngen (9) des Kupplungsstücks (6) axial auf der Höhe der Umfangsfläche des in Gebrauchsstellung eingrei fenden Bundes (5) angeordnet ist und in Kupplungsposition eine Flachseite am Umfang des unrunden Bundes (5) beaufschlagt.

7. Klemmverschraubung nach einem der Ansprüche 1 bis 6, **dadurch gekennzeichnet , dass** die Zahl der radial nach innen an dem Kupplungsstück (6) vorstehenden Vorsprünge (9) und die der zwischen ihnen angeordneten Zwischenräume der Zahl der Ecken (5b) oder gegenüber Abflachungen vorspringenden Bereiche des Bundes (5) der Schraubhülse (2) entspricht.

8. Klemmverschraubung nach einem der Ansprüche 1 bis 7, **dadurch gekennzeichnet , dass** zum Kuppeln oder Verriegeln der Schraubhülse (2) an dem Kupplungsstück (6) eine relative gegenseitige Verdrehung um einen Winkelbetrag vorgesehen ist, der mit der Zahl der Vorsprünge (9) oder Zwischenräume und Ecken (5b) oder dergleichen multipliziert 180° ergibt.

9. Klemmverschraubung nach einem der Ansprüche 5 oder 6, **da** **durch gekennzeichnet, dass** die Klemmschraube(n) eine Madenschrauba ist/sind.

10. Klemmverschraubung nach einem der Ansprüche 1 bis 9, **dadurch gekennzeichnet, dass** die Vertiefung (7) an dem Kupplungsstück (6) und dessen Befestigungsbereich (10) axial hintereinander angeordnet sind.

11. Klemmverschraubung nach einem der Ansprüche 1 bis 10, **dadurch gekennzeichnet, dass** wenigstens einer der Vorsprünge (9) des Kupplungsstücks (6) bei oder nach dem Einstecken des Bundes (5) der Schraubhülse (2) in die Vertiefung (7) aus einer zurückgezogenen Position etwa radial nach innen verstellbar, beispielsweise mittels Gewinde verschraubbar ist.

12. Klemmverschraubung nach einem der Ansprüche 1 bis 11 , **dadurch gekennzeichnet, dass** innerhalb der Vertiefung (7) als axialer Anschlag für den Bund (5) ein elastischer Ring (16), insbesondere ein Dichtring oder O-Ring vorgesehen ist, der in Gebrauchsstellung bzw. in axialer Richtung etwas zusammengedrückt ist.

13. Klemmverschraubung nach einem der vorstehenden Ansprüche, **dadurch gekennzeichnet, dass** die Längsmittelachse des Befestigungsbereichs (10) gegenüber der Längs mittelachse der Vertiefung (7) des Kupplungsstücks (6) abgewinkelt ist.

14. Klemmverschraubung nach einem der Ansprüche 5, 6 oder 9, **dadurch gekennzeichnet, dass** die Klemmschraube(n) (15) an einer Stelle größer Dicke der Wandung (7a) der Vertiefung (7) angeordnet ist.

## Claims

1. Terminal connection (1) having a threaded sleeve (2), a counter-sleeve (3) or similar pressure member which can be connected to said threaded sleeve and a terminal insert which can be pressed thereby against an elongate body (4) such as a cable, pipe, hose, rod or the like, wherein the counter-sleeve (3) or the pressure member acts on or engages over the terminal insert with a ring-shaped pressing surface at least on one of the end faces and, when a thread is screwed tight, radially deforms a region of the terminal insert which comprises slots or similar openings against the elongate body, with a tapering shape, for example by means of a rounded portion or a cone arranged on the terminal insert, in the threaded sleeve (2) or instead of the ring-shaped pressing surface in the counter-sleeve (3), the threaded sleeve (2) comprising a radially protruding flange or collar (5) the circumferential contour of which is in particular non-round or polygonal, **characterised in that** associated with the terminal connection (1) is a coupling member (6) releasably connectable thereto, having a recess (7) and a passage (8) for the elongate member (4), the radially projecting collar (5) of the threaded sleeve (2) fitting into said recess (7) and being insertable therein, **in that** this coupling member (6) comprises, at the front edge portion of its recess (7) in the direction of insertion of the threaded sleeve (2), radially inwardly directed projections (9) for engaging over the collar (5) of the threaded sleeve (2) in the coupling position and **in that** the coupling member (6) has, adjacent to the recess (7), a fixing area (10) for connecting to a mating part or a retaining nut and/or a through-opening (11) of a housing (12).

2. Terminal connection according to claim 1, **characterised in that** the fixing area (10) of the coupling member (6) has an external thread which fits an internal thread of a through-opening (11) in the housing or a retaining nut or similar mating part.

3. Terminal connection according to claim 1 or 2, **characterised in that** the threaded sleeve (2) has, adjacent to the collar (5), a fixing portion (13), e.g. an external thread, by means of which it is releasably connectable to a mating part or a retaining nut and/or a through-opening (11) in a housing (12), and **in that** the fixing portion (13) of the threaded sleeve (2) and the fixing area (10) of the coupling member (6) are of similar construction and/or dimensions.

4. Terminal connection according to one of claims 1 to 3, **characterised in that** the coupling member (6) comprises, between the radially inwardly directed projections (9), gaps (14) of greater radial size, the dimensions of the gaps (14) in the radial and circumferential directions being greater than or equal to those of the radially projecting regions or angles of the non- round or polygonal collar (5) of the terminal connection (1), the radially inwardly directed projections (9) of the coupling member (6) projecting to such an extent relative thereto that the flattened portions (5a) between the angles (5b) of the projections of the non-round or polygonal collar (5) fit between them and that the non-round or polygonal collar (5), after axial insertion, can be rotated at least to move underneath the projections (9) of the coupling member (6) so that its projecting regions or angle regions (5b) are located underneath or behind the projections (9) of the coupling member (6).

5. Terminal connection according to one of claims 1 to 4, **characterised in that** there is provided on the coupling member (6) at least one terminal screw (15) or the like which can be screwed in radially, in particular, e.g. a grub screw for engaging the outside of the collar (5) in the coupling position.

6. Terminal connection according to claim 5, **characterised in that** the terminal screw or screws (15) is or are arranged in the region of a gap between two radial projections (9) of the coupling member (6), axially level with the circumferential surface of the collar (5) engaging in the position of use and, in the coupling position, act or acts upon a flat side on the circumference of the non-round collar (5).

7. Terminal connection according to one of claims 1 to 6, **characterised in that** the number of projections (9) protruding radially inwards on the coupling member (6) and the number of gaps provided between them corresponds to the number of angles (5b) or parts of the collar (5) of the threaded sleeve (2) projecting relative to the flattened areas.

8. Terminal connection according to one of claims 1 to 7, **characterised in that** for the purpose of coupling or locking the threaded sleeve (2) to the coupling member (6), relative mutual rotation through a certain angle is envisaged, which when multiplied by the number of projections (9) or gaps and angles (5b) or the like amounts to 180°.

9. Terminal connection according to one of claims 5 or 6, **characterised in that** the terminal screw or screws is or are grub screw(s).

10. Terminal connection according to one of claims 1 to 8, **characterised in that** the recess (7) on the coupling member (6) and its fixing area (10) are disposed axially one behind the other.

11. Terminal connection according to one of claims 1 to 10, **characterised in that** at least one of the projections (9) of the coupling member (6) can be moved radially inwards to some extent, e.g. can be screwed in by means of a thread, during or after the insertion of the collar (5) of the threaded sleeve (2) into the recess (7), from an extended position.

12. Terminal connection according to one of claims 1 to 11, **characterised in that**, within the recess (7), there is provided as an axial abutment for the collar (5), an elastic ring (16), particularly a sealing ring or O-ring, which is somewhat compressed in the position of use or in the axial direction.

13. Terminal connection according to one of the preceding claims, **characterised in that** the central longitudinal axis of the fixing area (10) is at an angle to the central longitudinal axis of the recess (7) in the coupling member (6).

14. Terminal connection according to one of claims 5, 6 or 9, **characterised in that** the terminal screw or screws (15) is or are arranged at a thicker part of the wall (7a) of the recess (7).

## Revendications

1. Raccord de serrage (1) comprenant une douille filetée (2), une douille complémentaire (3) ou un élément presseur analogue pouvant être assemblé(e) avec la précédente, et un insert de serrage pouvant être pressé par ceux-ci contre un corps allongé (4) tel qu'un câble, un tube, un tuyau souple, une tige ou analogue, la douille complémentaire (3) ou l'élément presseur sollicitant l'insert de serrage ou s'enclenchant par-dessus ce dernier au moins sur l'une des faces frontales avec une surface de compression annulaire et, lorsque l'on visse à fond un raccord ayant une forme qui se rétrécit, par exemple avec un arrondi ou un cône situé sur l'insert de serrage, dans la douille filetée (2) ou à la place de la surface de compression annulaire dans la douille complémentaire (3), une zone de l'insert de serrage qui est munie de fentes ou d'espaces vides analogues est déformée radialement vers l'intérieur, en direction du corps allongé, et la douille filetée (2) présentant un épaulement ou bride (5) dont le pourtour est notamment non rond ou polygonal, **caractérisé en ce qu'**un élément d'accouplement (6), qui peut être assemblé de façon amovible avec le raccord de serrage (1), fait partie dudit raccord de serrage et est doté d'un renfoncement (7) et d'un passage (8) pour le corps allongé (4), renfoncement (7) dans lequel l'épaulement (5) de la douille filetée (2) faisant saillie radialement s'emboîte parfaitement, **en ce que** ledit élément d'accouplement (6) présente dans la zone périphérique avant de son renfoncement (7) par rapport au sens d'emboîtement de la douille filetée (2) des saillies (9) pointant radialement vers l'intérieur pour venir s'enclencher par-dessus l'épaulement (5) de la douille filetée (2) en position accouplée, et **en ce que** l'élément d'accouplement (6) comporte au voisinage du renfoncement (7) une zone de fixation (10) pour l'assembler avec un élément complémentaire ou un écrou de fixation et/ou une ouverture (11) d'un boîtier (12).

2. Raccord de serrage selon la revendication 1, **caractérisé en ce que** la zone de fixation (10) de l'élément d'accouplement (6) comporte un filetage adapté à un taraudage d'une ouverture (11) du boîtier, d'un écrou de fixation ou d'une pièce complémentaire analogue.

3. Raccord de serrage selon la revendication 1 ou 2, **caractérisé en ce que** la douille filetée (2) présente à proximité de l'épaulement (5) un segment de fixation (13), par exemple un filetage, par lequel elle peut être assemblée avec un élément complémentaire ou un écrou de retenue et/ou une ouverture (11) d'un boîtier (12), et **en ce que** le segment de fixation (13) de la douille filetée (2) et la zone de fixation (10) de la pièce d'accouplement (6) sont réalisés et/ou dimensionnés de manière à coïncider l'un avec l'autre.

4. Raccord de serrage selon l'une des revendications 1 à 3, **caractérisé en ce que** l'élément d'accouplement (6) présente entre les saillies (9) pointant radialement vers l'intérieur des intervalles (14) de plus grande étendue radiale, l'étendue desdits intervalles (14) dans la direction radiale et dans la direction du pourtour étant égale ou supérieure à celle des zones ou des coins de l'épaulement non rond ou polygonal (5) du raccord de serrage (1) qui font saillie radialement, mais les saillies (9) de l'élément d'accouplement (6) qui pointent radialement vers l'intérieur faisant en revanche saillie au point que les aplatissements (5a) entre les coins (5b) des saillies de l'épaulement (5) non rond ou polygonal peuvent se loger entre elles et qu'après l'insertion axiale, l'épaulement (5) non rond ou polygonal puisse tourner sous les saillies (9) de l'élément d'accouplement (6) au moins au point que ses zones ou coins (5b) faisant saillie soient placé(e)s sous ou derrière les saillies (9) de l'élément d'accouplement (6).

5. Raccord de serrage selon l'une des revendications 1 à 4, **caractérisé en ce qu'**au moins une vis de serrage (15) ou analogues, par exemple une vis sans tête, pouvant notamment être vissée radialement est disposée sur l'élément d'accouplement (6), afin de solliciter le côté extérieur de l'épaulement (5) en position accouplée.

6. Raccord de serrage selon la revendication 5, **caractérisé en ce que** la (les) vis de serrage (15) est (sont) disposée(s) dans un intervalle, entre deux saillies radiales (9) de l'élément d'accouplement (6), à la hauteur, dans la direction axiale, de la surface périphérique de l'épaulement (5) qui s'y met en prise en position d'utilisation, et sollicite(nt) une face plate sur le pourtour de l'épaulement (5) non rond en position accouplée.

7. Raccord de serrage selon l'une des revendications 1 à 6, **caractérisé en ce que** le nombre de saillies (9) pointant radialement vers l'intérieur sur l'élément d'accouplement (6) et le nombre des intervalles disposés entre elles correspond au nombre de coins (5b) ou de zones de l'épaulement (5) de la douille filetée (2) qui font saillie en face d'aplatissements.

8. Raccord de serrage selon l'une des revendications 1 à 7, **caractérisé en ce que** pour accoupler ou verrouiller la douille filetée (2) à l'élément d'accouplement (6), une rotation réciproque est prévue sur un certain angle, qui, multiplié par le nombre de saillies (9) ou d'intervalles et de coins (5b) ou analogues, est égal à 180°.

9. Raccord de serrage selon la revendication 5 ou 6, **caractérisé en ce que** la (les) vis de serrage est (sont) une vis sans tête.

10. Raccord de serrage selon l'une des revendications 1 à 9, **caractérisé en ce que** le renfoncement (7) sur l'élément d'accouplement (6) et la zone de fixation (10) de ce dernier sont disposés l'un à la suite de l'autre dans la direction axiale.

11. Raccord de serrage selon l'une des revendications 1 à 10, **caractérisé en ce que** lors de l'enfoncement de l'épaulement (5) de la douille filetée (2) dans le renfoncement (7) ou après cela, au moins l'une des saillies (9) de l'élément d'accouplement (6) peut être déplacée approximativement radialement vers l'intérieur à partir d'une position en retrait, par exemple vissée au moyen d'un filetage.

12. Raccord de serrage selon l'une des revendications 1 à 11, **caractérisé en ce qu'**à l'intérieur du renfoncement (7) une bague élastique (16), notamment une bague d'étanchéité ou un joint torique, est prévue en tant que butée axiale pour l'épaulement (5), laquelle est légèrement comprimée respectivement en position d'utilisation et en direction axiale.

13. Raccord de serrage selon l'une des revendications précédentes, **caractérisé en ce que** l'axe médian longitudinal de la zone de fixation (10) est coudé par rapport à l'axe médian longitudinal du renfoncement (7) de l'élément d'accouplement (6).

14. Raccord de serrage selon l'une des revendications 5, 6 ou 9, **caractérisé en ce que** la (les) vis de serrage (15) est (sont) disposée(s) en un endroit où l'épaisseur de la paroi (7a) du renfoncement (7) est importante.
